# EUROPEAN PATENT SPECIFICATION

(11) **EP 4 462 665 B1**
(45) Date of publication and mention of the grant of the patent: **11.03.2026**
(21) Application number: 23172469.1
(22) Date of filing: 10.05.2023
(51) Int. Cl.: H02M 3/00, H02M 1/00, H02M 3/335, H05B 45/382

(54) **ISOLATED, PRIMARY SIDE SWITCHED RESONANT CONVERSION FOR SUPPLYING A LED LOAD**
ISOLIERTE, PRIMÄRSEITIG GESCHALTETE RESONANZWANDLUNG ZUR VERSORGUNG EINER LED-LAST
CONVERSION RÉSONANT COMMUTÉ CÔTÉ PRIMAIRE ISOLÉ POUR FOURNIR UNE CHARGE DE DEL

(43) Date of publication of application: 13.11.2024
(73) Proprietor: Tridonic GmbH & Co KG, 6851 Dornbirn (AT)
(72) Inventor: Netzer, Harald, 6850 Dornbirn (AT); Maldoner, Jakob, 6850 Dornbirn (AT)
(74) Representative: Rupp, Christian

(56) References cited:
- EP-A1- 3 907 870
- US-A1- 2015 002 032
- US-B1- 9 960 693

## Description

The invention relates to isolated, primary side switched resonant converters for supplying a LED load, a LED lighting module comprising such converters and a LED load, a method for operating an isolated, primary side switched resonant converter supplying an LED load, and an integrated control circuit implementing such a method.

Resonant converters are preferably operated with a frequency close to their resonant frequency. A change of output current or voltage is performed by modulating high frequency pulses of the resonant converter with a low frequency pulse width modulation PWM signal. By adjusting the duty cycle of the PWM signal, a dimming of the power transmitted by the converter, and thus the resulting current through the load can be achieved.

When the converter is operated with a frequency different from the resonant frequency, typically higher than the resonance frequency, a switching-off of the high frequency pulses of the resonant converter does not necessary lead to an immediate switching off of the power transmission between the primary converter side and the secondary converter side of the converter. Rather, it can lead to an ongoing power transmission with a relatively high peak and a resulting ripple in the output current supplied to the load. This leads to a sub-optimal switching behavior with regard to output current control.

For instance, EP 3 907 870 A1 discloses a resonant converter comprising a primary converter side, comprising a converter switching circuit, a secondary converter side, and a controller. The controller is configured to operate the converter switching circuit using pulse width modulation, for regulating a power transfer from the primary converter side to the secondary converter side. The resonant converter comprises an overshoot protection circuit connected to the primary converter side and/or to the controller. The overshoot protection circuit is configured to, and as switch-off event, effectively stop a power transfer from the primary converter side to the secondary converter side at the end of a pulse width modulation pulse. Furthermore, the overshoot protection circuit comprises a zero crossing detection circuit. The zero crossing detection circuit comprises a current measuring coil, which is coupled to the first resonant inductor, and a current measuring circuit, connected to the current measuring coil. Disadvantageously, due to an expensive design especially in the sense of the required current measuring coil, said resonant converter does not allow for a particularly high cost-efficiency in the context of a very accurate output current control.

Furthermore, US 9 960 693 B1 discloses a method of controlling a first switch and a second switch of a resonant mode power converter circuit, the method comprising delivering control signals to the first switch and the second switch at a switching frequency. The method also comprises determining, for a first driving period, a first phase relation between a phase of a resonant current in the resonant mode power converter circuit and a phase of the control signals. The method further comprises determining, for a second driving period, a second phase relation between a phase of the resonant current and a phase of the control signals, and controlling the switching frequency based on a difference of the first phase relation and the second phase relation.

Moreover, US 2015/0002032 A1 provides an LED converter for operating a load comprising at least one LED series with at least one LED, preferably with multiple LEDs, wherein the LED converter on the primary side comprises a resonant converter supplied with a direct current voltage. Said converter has a half-bridge constructed of two reciprocally clocked switches and providing a supply voltage for the LED series through a serial/parallel resonance circuit connected to the midpoint of said bridge. The LED converter has a control unit that is arranged for adjusting the clocking frequency of the half bridge. To control or regulate the power transferred by the LED converter to the LED series, the control unit is arranged to vary the frequency of the clocking in a frequency corridor that is delimited on at least one side, and to vary the amplitude of the direct current voltage supplying the resonant converter if a change of the load and/or the change of a setpoint value for the power would lead to a frequency operating point outside the frequency corridor.

Accordingly, the object of the invention is to provide an improved power converter, which allows not only for a very accurate output current control but also for a particularly high cost-efficiency.

The object is solved by the features of the independent claims. Additional features of the invention are provided in the dependent claims.

According to a first aspect of the invention, an isolated, primary side switched resonant converter for supplying an LED load is provided. Said converter comprises an isolation barrier defining a primary side and a secondary side, a control circuit arranged for varying the power transmitted by the converter by modulating HF switching operations, preferably with constant frequencies, of at least primary side switch of the converter with LF PWM pulses with variable duty cycle, and means for detecting the falling zero crossings of a current through a primary side resonance circuit of the converter. In this context, the control circuit is designed to calculate the timing of the rising zero crossings of the current through the primary side resonance circuit of the converter. In addition to this, the control circuit is arranged to control the trailing high/low transition of each PWM pulse to be during one of the rising/falling zero crossings. Advantageously, a particularly high cost-efficiency can be ensured especially in the context of a very accurate output current control.

According to the first aspect of the invention, the means for detecting the falling zero crossing comprises or is a shunt resistor. Advantageously, for example, complexity can be reduced, which leads to an increased cost-efficiency.

According to the first aspect of the invention, the shunt resistor is connected in series to a low side switch of a half bridge of the converter.

According to the first aspect of the invention, calculating the timing of the rising zero crossings comprises an extrapolation. Advantageously, for instance, the timing of the rising zero crossing can be calculated in a particularly cost-efficient manner.

According to the first aspect of the invention, the extrapolation is based on the modulation of the HF switching operations. Advantageously, for example, complexity of extrapolation can be reduced, thereby increasing cost-efficiency.

According to further implementation form of the first aspect of the invention, the control circuit is designed to not limit the leading low/high transition of each PWM pulse to the rising/falling zero crossing periods. Advantageously, for instance, the converter can further be improved.

According to further implementation form of the first aspect of the invention, the converter is any of a half bridge LLC, half bridge LCC or resonant flyback converter. Advantageously, for example, a high flexibility can be ensured, which leads to an increased cost-efficiency.

According to further implementation form of the first aspect of the invention, the control circuit has a dimming signal input. Advantageously, for instance, accuracy and cost-efficiency can further be increased.

According to a second aspect of the invention, a LED lighting module is provided. Said LED lighting module comprises a converter according to the first aspect of the invention or any of its implementation forms, respectively, and a LED load supplied directly or indirectly by said converter. Advantageously, a particularly high cost-efficiency can be ensured especially in the context of a very accurate output current control.

According to a third aspect of the invention, a method for operating an isolated, primary side switched resonant converter supplying an LED load is provided. Said method comprises the steps of varying the power transmitted by the converter by modulating HF switching operations, preferably with constant frequencies, of at least primary side switch of the converter with LF PWM pulses with variable duty cycle, detecting the falling zero crossing of a current through a primary side resonance circuit of the converter, calculating the timing of the rising zero crossings of the current through the primary side resonance circuit of the converter, and controlling the trailing high/low transition of each PWM pulse to be during one of the rising/falling zero crossings. Advantageously, a particularly high cost-efficiency can be ensured especially in the context of a very accurate output current control.

According to the third aspect of the invention, the falling zero crossing is detected with the aid of a shunt resistor. Advantageously, for instance, complexity can be reduced, thereby increasing cost-efficiency. According to the third aspect of the invention, the shunt resistor is connected in series to a low side switch of a half bridge of the converter.

According to the third aspect of the invention, calculating the timing of the rising zero crossings comprises performing an extrapolation. Advantageously, for example, the timing of the rising zero crossing can be calculated in a particularly cost-efficient manner.

According to the third aspect of the invention, the extrapolation is based on the modulation of the HF switching operations. Advantageously, for instance, complexity of extrapolation can be reduced, thereby increasing cost-efficiency.

According to a fourth aspect of the invention, an integrated control circuit arranged for implementing the steps of the third aspect of the invention or any of its implementation forms, respectively, is provided. Advantageously, a particularly high cost-efficiency can be ensured especially in the context of a very accurate output current control.

Exemplary embodiments of the invention are now further explained with respect to the drawings by way of example only, and not for limitation. In the drawings:
- Fig. 1: shows an exemplary embodiment of the first aspect of the invention in combination with the second aspect of the invention; and
- Fig. 2: shows a flow chart of an embodiment of the third aspect of the invention.

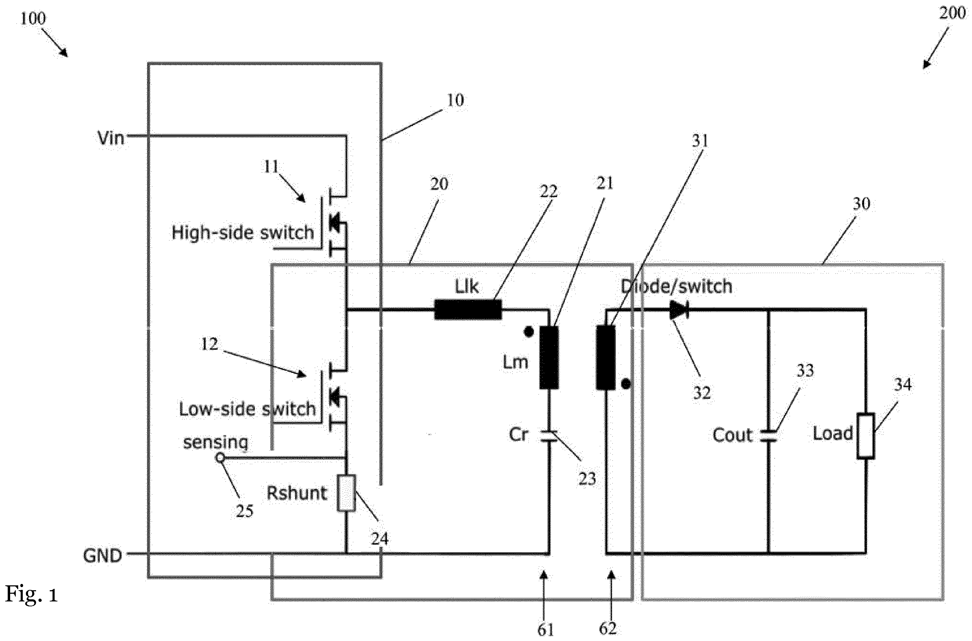

With respect to Fig. 1, a block diagram of an exemplary embodiment of an isolated, primary side switched resonant converter 100 for supplying an LED load 34 is illustrated.

Said converter 100 comprises an isolation barrier defining a primary side 61 and a secondary side 62, and means for detecting the falling zero crossing of a current through a primary side resonance circuit of the converter 100 exemplarily in the form of a shunt resistor 24.

With respect to said shunt resistor 24, it is noted that it might generally be advantageous if said shunt resistor is connected in series with the low side switch 12 of the half bridge 10 of the converter 100.

Furthermore, the converter 100 comprises a not explicitly shown control circuit arranged for varying the power transmitted by the converter 100 by modulating HF (high frequency) switching operations, preferably with constant frequencies, of at least primary side switch, such as the high side switch 11 and/or the low side switch 12, of the converter 100 with LF (low frequency) PWM (pulse width modulation) pulses with variable duty cycle.

In this context, the converter 100 is void of means for detecting the rising zero crossings of the current through the primary side resonance circuit of the converter 100. Additionally, the control circuit is designed to calculate the timing of the rising zero crossings of the current through the primary side resonance circuit of the converter 100.

Moreover, it is noted that the control circuit is arranged to control the trailing high/low transition of each PWM pulse to be during one of the rising/falling zero crossings.

It is further noted that the above-mentioned calculating the timing of the rising zero crossings comprises an extrapolation.

In this context, the extrapolation is based on the modulation of the HF switching operations.

Furthermore, the control circuit may preferably be designed to not limit the leading low/high transition of each PWM pulse to the rising/falling zero crossing periods.

It is further noted that it might be advantageous if the converter 100 is any of a half bridge LLC, half bridge LCC or resonant flyback converter.

Exemplarily, the converter 100 especially is a resonant hybrid flyback converter. "Hybrid flyback" can especially be understood as a "half-bridge circuit supplying a flyback resonant tank".

With respect to the above-mentioned control circuit, it is noted that it might be advantageous if the control circuit has a dimming signal input.

Before some further details of Fig. 1 are explained in the following, it is noted that said Fig. 1 also depicts a LED lighting module 200 comprising the above-mentioned converter 100 and the above-mentioned LED load 34 supplied directly or indirectly by said converter 100. Said further details are especially explained in the light that the converter 100 exemplarily is a resonant hybrid flyback converter as already mentioned above.

As it can be seen from Fig. 1, the converter or the resonant hybrid flyback converter 100, respectively, exemplarily comprises a half-bridge 10, and a flyback resonant tank 20 comprising a transformer with a primary side 61 and a secondary side 62.

In this context, the half-bridge 10 is configured to supply said primary side 61. Furthermore, the resonant hybrid flyback converter 100 is configured to sense a primary-side current in the flyback resonant tank 20 or to detect the falling zero crossing of the current through the primary side resonance circuit of the converter 100, respectively.

Advantageously, it is noted that said sensing can be used for an overcurrent detection.

With respect to the above-mentioned control circuit, it is noted that said control circuit can be a control unit especially controlling the operation of the high side switch 11 and/or the low side switch 12 of the half-bridge 10 and/or being supplied with a feedback signal ("sensing" or reference sign 25, respectively) from a sensing circuit (Rshunt or reference sign 24, respectively) configured to sense a primary-side current in the flyback resonant tank 20.

With respect to said control unit, it is noted that the control unit can also be a control and/or processing unit. In the following, the term "control and/or processing unit" will be used, wherein the corresponding features can analogously apply for the control unit 70. Nevertheless, it is also possible that such a control and/or processing unit is employed in addition to the control unit 70.

The above-mentioned half-bridge 10 comprises a high-side switch 11, exemplarily in the form of a first field-effect transistor, and a low-side switch 12, exemplarily in the form of a second field-effect transistor.

For the sake of completeness, with respect to said field-effect transistors 11 and 12, it is noted that said transistors are exemplarily of an n-channel enhancement type.

In this context, a first terminal, exemplarily a drain terminal, of the first field-effect transistor 11 is connected to a voltage potential, exemplarily a supply voltage, whereas a second terminal, exemplarily a source terminal, of the first field-effect transistor 11 is connected to a first terminal, exemplarily a drain terminal, of the second field-effect transistor 12. Furthermore, a second terminal, exemplarily a source terminal, of said second field-effect transistor 12 is connected to a voltage potential, especially another voltage potential, exemplarily ground.

It is further noted that a third terminal, exemplarily a gate terminal, of the first field-effect transistor 11 may especially be connected to the above-mentioned control circuit or control unit, respectively. In addition to this or as an alternative, a third terminal, exemplarily a gate terminal, of the second field-effect transistor 12 may especially be connected to the above-mentioned control circuit or control unit, respectively.

Moreover, the above-mentioned primary side 61 comprises a series connection of a leakage inductance 22, which can be optional or omitted, respectively, a corresponding transformer main inductance 21 and a capacitance 23, exemplarily a resonance capacitor. In this context, the corresponding primary-side current especially flows through said series connection.

Furthermore, especially in the context of sensing the corresponding primary-side current, the flyback resonant tank 20, exemplarily the primary side 61, comprises a resistance, exemplarily the shunt resistor 24 providing a sensing voltage in accordance with the corresponding primary-side current. Preferably the shunt resistor 24 is connected in series with the low side switch 12 of the half bridge 10 of the converter 100.

Note that the shunt resistor 24 can then in addition also be used for other monitoring purposes, such as over current or (indirect) over voltage conditions.

Exemplarily, in accordance with Fig. 1, the series connection further comprises said resistance or said shunt resistor 24 providing the sensing voltage in accordance with the corresponding primary-side current, respectively.

Moreover, the above-mentioned first terminal, exemplarily the drain terminal, of the second field-effect transistor 12 is connected to a first terminal of the leakage inductance 22, whereas a second terminal of said leakage inductance 22 is connected to a first terminal of the transformer main inductance 21. For the case that the leakage inductance 22 is omitted, it is noted that the first terminal of the second field-effect transistor 12 is connected to said first terminal of the transformer main inductance 21.

In addition to this, a second terminal of the transformer main inductance 21 is connected to a first terminal of the above-mentioned capacitance 23.

The low side switch 12 of the half bridge 10 is connected to a first terminal of the shunt resistor 24, whereas a second terminal of said shunt resistor 24 providing the sensing voltage in accordance with the corresponding primary-side current is connected to a voltage potential, exemplarily ground.

In further addition to this, the first terminal of the shunt resistor 24 is connected to a sensing terminal 25.

As it can further be seen from Fig. 1, the resonant hybrid flyback converter 100 further comprises supplying means 30 being configured to be supplied by the secondary side 62 and to supply the LED lighting means or the load 34, respectively.

In this context, the supplying means 30 comprise a switch and/or a diode, exemplarily a diode 32, and a capacitance, exemplarily an output capacitor 33.

Furthermore, the capacitance 33 is exemplarily connected in parallel to the load 34, whereas the diode 32 is exemplarily connected in series to the load 34.

In particular, a first terminal of a transformer secondary inductance 31 is connected to a first terminal, exemplarily an anode terminal, of the diode 32, whereas a second terminal, exemplarily a cathode terminal, of said diode 32 is connected to a first terminal of the capacitance 33 and to a first terminal of the load 34.

In addition to this, a second terminal of the transformer secondary inductance 31 is connected to a second terminal of the capacitance 33 and to a second terminal of the load 34.

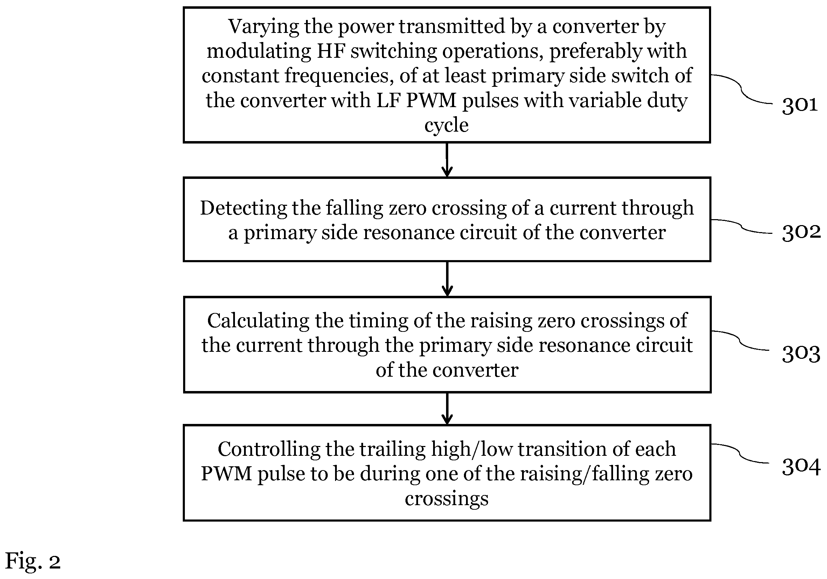

Finally, Fig. 2 shows a flow chart of an embodiment of the inventive method for operating an isolated, primary side switched resonant converter supplying an LED load. A first step 301 comprises varying the power transmitted by the converter by modulating HF switching operations, preferably with constant frequencies, of at least primary side switch of the converter with LF PWM pulses with variable duty cycle. Furthermore, a second step 302 comprises detecting the falling zero crossing of a current through a primary side resonance circuit of the converter. Moreover, a third step 303 comprises calculating the timing of the rising zero crossings of the current through the primary side resonance circuit of the converter. In addition to this, a fourth step 304 comprises controlling the trailing high/low transition of each PWM pulse to be during one of the rising/falling zero crossings.

With respect to the above-mentioned falling zero crossing according to step 302, it is noted that said falling zero crossing is detected with the aid of a resistor, preferably a shunt resistor.

It is further noted that it might be advantageous if said resistor, preferably said shunt resistor, is connected in series with a low side switch of a half bridge of the converter.

With respect to the above-mentioned step 303, it is noted that calculating the timing of the rising zero crossings comprises an extrapolation or performing an extrapolation, respectively.

With respect to said extrapolation, it is noted that the extrapolation is based on the frequency of the HF switching operations or the modulation of the HF switching operations. The rising zero cross will occur one half HF switching cycle after the falling zero cross.

## Claims

1. Isolated, primary side switched resonant converter (100) for supplying a LED load (34),
comprising:
- an isolation barrier defining a primary side (61) and a secondary side (62),
- a control circuit arranged for varying the power transmitted by the converter (100) by modulating HF switching operations, preferably with constant frequencies, of at least primary side switch (11, 12) of the converter (100) with LF PWM pulses with variable duty cycle,
- means for detecting (24) the falling zero crossings of a current through a primary side resonance circuit of the converter (100),
wherein the control circuit is designed to calculate the timing of the rising zero crossings of the current through the primary side resonance circuit of the converter (100), and
wherein the control circuit is arranged to control the trailing high transition of each PWM pulse to be during the rising zero crossings, and to control the trailing low transition of each PWM pulse to be during the falling zero crossings,
**characterized in that**
the means for detecting (24) the falling zero crossing comprises a shunt resistor arranged between a low side switch of a half-bridge converter and ground potential,
calculating the timing of the rising zero crossings comprises an extrapolation, and
the extrapolation is based on the frequency of the HF switching operations.

2. The converter (100) of claim 1,
wherein the means for detecting (24) the falling zero crossing comprises or is a resistor, preferably a shunt resistor.

3. The converter (100) of any of the preceding claims, wherein the control circuit is designed to not limit the leading low transition of each PWM pulse to the rising zero crossing periods, and to not limit the leading high transition of each PWM pulse to the falling zero crossing periods.

4. The converter (100) of any of the preceding claims, wherein the converter is any of a half bridge LLC, half bridge LCC or resonant flyback converter.

5. The converter (100) of any of the preceding claims, wherein the control circuit has a dimming signal input.

6. A LED lighting module (200) comprising a converter (100) according to any of the preceding claims and a LED load (34) supplied directly or indirectly by said converter.

7. A method for operating an isolated, primary side switched resonant converter supplying an LED load,
comprising the steps of:
- varying (301) the power transmitted by the converter by modulating HF switching operations, preferably with constant frequencies, of at least primary side switch of the converter with LF PWM pulses with variable duty cycle,
- detecting (302) the falling zero crossing of a current through a primary side resonance circuit of the converter,
- calculating (303) the timing of the rising zero crossings of the current through the primary side resonance circuit of the converter, and
- controlling (304) the trailing high transition of each PWM pulse to be during the rising zero crossings, and controlling the trailing low transition of each PWM pulse to be during the falling zero crossings,
**characterized in that**
the falling zero crossing is detected with the aid of a shunt resistor,
calculating the timing of the rising zero crossings comprises performing an extrapolation, and
the extrapolation is based on the modulation of the HF switching operations.

8. An integrated control circuit arranged for implementing the steps of claim 7.

## Patentansprüche

1. Isolierter, primärseitig geschalteter Resonanzwandler (100) zur Versorgung einer LED-Last (34), umfassend:
• eine Isolationsbarriere, die eine Primärseite (61) und eine Sekundärseite (62) definiert,
• eine Steuerschaltung, die ausgebildet ist, die vom Wandler (100) übertragene Leistung zu variieren, indem Hochfrequenz-Schaltvorgänge (HF) - vorzugsweise bei konstanter Frequenz - mindestens eines primärseitigen Schalters (11, 12) des Wandlers (100) mit niederfrequenten PWM-Impulsen variablen Tastverhältnisses moduliert werden,
• Mittel (24) zum Erfassen der fallenden Nulldurchgänge eines Stroms durch einen primärseitigen Resonanzkreis des Wandlers (100),
wobei die Steuerschaltung ausgebildet ist, den Zeitpunkt der steigenden Nulldurchgänge des Stroms durch den primärseitigen Resonanzkreis des Wandlers (100) zu berechnen,
und wobei die Steuerschaltung eingerichtet ist, den abklingenden Übergang jedes PWM-Impulses auf den High-Pegel so zu steuern, dass er während eines der steigenden Nulldurchgänge erfolgt, und den abklingenden Übergang jedes PWM-Impulses auf den Low-Pegel so zu steuern, dass er während eines der fallenden Nulldurchgänge erfolgt,
**dadurch gekennzeichnet, dass**
die Erfassung des fallenden Nulldurchgangs mittels des Mittels (24) einen Shunt-Widerstand umfasst, der zwischen einem Low-Side-Schalter einer Halbbrücke des Wandlers und dem Massepotential angeordnet ist,
die Berechnung des Zeitpunkts der steigenden Nulldurchgänge eine Extrapolation umfasst, und
die Extrapolation auf der Frequenz der HF-Schaltvorgänge basiert.

2. Der Wandler (100) nach Anspruch 1, wobei die Mittel (24) zum Erfassen des fallenden Nulldurchgangs eine Widerstandsvorrichtung umfassen oder darstellen, vorzugsweise einen Shunt-Widerstand.

3. Der Wandler (100) nach einem der vorhergehenden Ansprüche, wobei die Steuerschaltung ausgebildet ist, den vorderen Übergang jedes PWM-Impulses zum Low-Pegel nicht auf die Zeiträume der steigenden Nulldurchgänge zu beschränken und den vorderen Übergang jedes PWM-Impulses zum High-Pegel nicht auf die Zeiträume der fallenden Nulldurchgänge zu beschränken.

4. Der Wandler (100) nach einem der vorhergehenden Ansprüche, wobei der Wandler ein Halbbrücken-LLC-, ein Halbbrücken-LCC- oder ein resonanter Sperrwandler ist.

5. Der Wandler (100) nach einem der vorhergehenden Ansprüche, wobei die Steuerschaltung einen Dimmsignaleingang aufweist.

6. LED-Beleuchtungsmodul (200), umfassend einen Wandler (100) nach einem der vorhergehenden Ansprüche und eine LED-Last (34), die direkt oder indirekt von dem Wandler (100) versorgt wird.

7. Verfahren zum Betreiben eines isolierten, primärseitig geschalteten Resonanzwandlers zur Versorgung einer LED-Last, umfassend die Schritte:
• Variieren (301) der vom Wandler übertragenen Leistung durch Modulation von HF-Schaltvorgängen, vorzugsweise mit konstanter Frequenz, mindestens eines primärseitigen Schalters des Wandlers mit niederfrequenten PWM-Impulsen variablen Tastverhältnisses,
• Erfassen (302) des fallenden Nulldurchgangs eines Stroms durch einen primärseitigen Resonanzkreis des Wandlers,
• Berechnen (303) des Zeitpunkts der steigenden Nulldurchgänge des Stroms durch den primärseitigen Resonanzkreis des Wandlers, und
• Steuern (304) des abklingenden Übergangs jedes PWM-Impulses auf den High-Pegel derart, dass er während der steigenden Nulldurchgänge erfolgt, und Steuern des abklingenden Übergangs jedes PWM-Impulses auf den Low-Pegel derart, dass er während der fallenden Nulldurchgänge erfolgt,
wobei der fallende Nulldurchgang mit Hilfe eines Shunt-Widerstands erfasst wird, wobei die Berechnung des Zeitpunkts der steigenden Nulldurchgänge eine Extrapolation umfasst, und
wobei die Extrapolation auf der Modulation der HF-Schaltvorgänge basiert.

8. Integrierte Steuerschaltung, die zum Durchführen der Schritte des Verfahrens nach Anspruch 7 ausgebildet ist.

## Revendications

1. Convertisseur résonant isolé à commutation du côté primaire (100) pour l'alimentation d'une charge à LED (34), comprenant :
• une barrière d'isolation définissant un côté primaire (61) et un côté secondaire (62),
• un circuit de commande configuré pour faire varier la puissance transmise par le convertisseur (100) en modulant des opérations de commutation HF - de préférence à fréquence constante - d'au moins un interrupteur côté primaire (11, 12) du convertisseur (100) au moyen d'impulsions PWM de basse fréquence à rapport cyclique variable,
• des moyens (24) de détection des passages par zéro descendants d'un courant dans un circuit résonant côté primaire du convertisseur (100),
dans lequel le circuit de commande est conçu pour calculer le moment des passages par zéro montants du courant dans le circuit résonant côté primaire du convertisseur (100),
et dans lequel le circuit de commande est agencé pour commander la transition de fin d'impulsion vers le niveau haut de chaque impulsion PWM de sorte qu'elle se produise pendant l'un des passages par zéro montants, et pour commander la transition de fin d'impulsion vers le niveau bas de chaque impulsion PWM de sorte qu'elle se produise pendant l'un des passages par zéro descendants,
le convertisseur étant **caractérisé en ce que** :
• les moyens (24) de détection du passage par zéro descendant comprennent une résistance disposée entre un interrupteur côté bas d'un demi-pont du convertisseur et un potentiel de masse, de préférence une résistance de shunt,
• le calcul du moment des passages par zéro montants comprend une extrapolation,
• et l'extrapolation est basée sur la fréquence des commutations HF.

2. Convertisseur (100) selon la revendication 1, dans lequel les moyens (24) de détection du passage par zéro descendant comprennent une résistance, de préférence une résistance de shunt, ou sont constitués par une telle résistance.

3. Convertisseur (100) selon l'une quelconque des revendications précédentes, dans lequel le circuit de commande est conçu pour ne pas limiter la transition initiale vers le niveau bas de chaque impulsion PWM aux périodes de passage par zéro montant, et pour ne pas limiter la transition initiale vers le niveau haut de chaque impulsion PWM aux périodes de passage par zéro descendant.

4. Convertisseur (100) selon l'une quelconque des revendications précédentes, dans lequel le convertisseur est choisi parmi : un convertisseur LLC à demi-pont, un convertisseur LCC à demi-pont, et un convertisseur flyback résonant.

5. Convertisseur (100) selon l'une quelconque des revendications précédentes, dans lequel le circuit de commande comporte une entrée de signal de gradation.

6. Module d'éclairage à LED (200) comprenant un convertisseur (100) selon l'une quelconque des revendications précédentes, et une charge à LED (34) alimentée directement ou indirectement par ledit convertisseur (100).

7. Procédé de fonctionnement d'un convertisseur résonant isolé, à commutation du côté primaire, alimentant une charge à LED, comprenant les étapes consistant à :
• faire varier (301) la puissance transmise par le convertisseur en modulant des opérations de commutation HF, de préférence à fréquence constante, d'au moins un interrupteur côté primaire du convertisseur au moyen d'impulsions PWM de basse fréquence à rapport cyclique variable,
• détecter (302) le passage par zéro descendant d'un courant dans un circuit résonant côté primaire du convertisseur,
• calculer (303) le moment des passages par zéro montants du courant dans le circuit résonant côté primaire du convertisseur, et
• commander (304) la transition de fin d'impulsion vers le niveau haut de chaque impulsion PWM de sorte qu'elle se produise pendant l'un des passages par zéro montants, et commander la transition de fin d'impulsion vers le niveau bas de chaque impulsion PWM de sorte qu'elle se produise pendant l'un des passages par zéro descendants,
le procédé étant **caractérisé en ce que** :
• le passage par zéro descendant est détecté à l'aide d'une résistance de shunt,
• le calcul du moment des passages par zéro montants comprend une extrapolation,
• et l'extrapolation est basée sur la modulation des commutations HF.

8. Circuit de commande intégré, agencé pour mettre en œuvre les étapes du procédé selon la revendication 7.
